# EUROPEAN PATENT SPECIFICATION

(11) **EP 3 552 952 B1**
(45) Date of publication and mention of the grant of the patent: **03.03.2021**
(21) Application number: 18382247.7
(22) Date of filing: 11.04.2018
(51) Int. Cl.: B64C 3/20, B64C 3/26, B64C 3/28, B64C 5/02

(54) **AIRCRAFT LAMINAR MULTISPAR LIFTING SURFACE**
LAMINARE AUFTRIEBSOBERFLÄCHE MIT MEHREREN HOLMEN FÜR FLUGZEUG
SURFACE PORTANTE MULTILONGERONS LAMINAIRE D'AÉRONEF

(43) Date of publication of application: 16.10.2019
(73) Proprietor: Airbus Operations, S.L., 28906 Getafe Madrid (ES)
(72) Inventor: HONORATO RUIZ, Francisco Javier, 28906 Getafe (ES); GUINALDO FERNÁNDEZ, Enrique, 28906 Getafe (ES); GARCÍA NIETO, Carlos, 28906 Getafe (ES); ARANA HIDALGO, Alberto, 28906 Getafe (ES); CEBOLLA GARROFE, Pablo, 28906 Getafe (ES); NÚÑEZ DELGADO, Julio, 28906 Getafe (ES); MARTÍN PALOMARES, David, 28906 Getafe (ES); CRUZ DOMÍNGUEZ, Francisco José, 28906 Getafe (ES)
(74) Representative: Elzaburu S.L.P.

(56) References cited:
- EP-A1- 2 687 436
- EP-A1- 3 095 691
- EP-A1- 3 156 323
- EP-A2- 1 176 089

## Description

### Field of the invention

This invention refers to an aircraft laminar multispar lifting surface to be used, in particular, in a horizontal tail plane (HTP), a vertical tail plane (VTP) and a wing of an aircraft.

### Background of the invention

As previously indicated, the invention is applicable, in particular, to a horizontal tail plane (HTP), a vertical tail plane (VTP) and a wing of an aircraft, which share a similar structure.

Focusing on horizontal tail planes (HTP), these structural parts of an aircraft comprise a right torsion box and a left torsion box, both structures being joined by means of a central torsion box or by means of a central joint. Said torsion boxes comprise external and internal elements. The external elements are typically two front spars, two rear spars, two closing ribs, two upper covers and two lower covers, one of the elements being located in the right torsion box of the HTP and the other in the left torsion box. The known internal elements of the torsion box are:
- Intermediate spars, which are elements running along the span and located between the front and the rear spars.
- Intermediate ribs, which are spanwise distributed running along the chord and could extend between the front spar and the rear spar.
- Central spars, located in the central box (if applicable) of the HTP which are elements parallel to the aircraft Y plane and perpendicular to the longitudinal axis of the aircraft.
- Stringers, which are elements running along the span and located on the upper and lower covers.

Known trimmable horizontal tail planes have three supporting points which are described as follows:
- Two points acting as pivot interface which act as supports reacting loads. The axis joining these two elements is the pivot axis.
- One point acting as jack fitting interface which is a load introduction area which allows the horizontal tail plane to be trimmable.
- In addition to these supporting points, there are two zones acting as actuators interface which are also load introduction areas as they react the loads generated by the control surfaces, for instance, elevators.

Known technical solutions applied to torsion boxes and lifting surfaces comprising the previously described elements and receiving the previously described loads are the pure multirib torsion box structure and the pure multispar torsion box structure.

Pure multirib torsion box structures comprise a forward spar, a rear spar, ribs and upper and lower covers, and pure multispar torsion box structures comprise a forward spar, a rear spar, intermediate spars, upper and lower covers and also, sometimes, ribs (if needed, placed between the front and rear spars) located next to the load introduction areas.

One example of a multispar torsion box structure is disclosed in EP 2153979 A1, referred to an "Integrated Multispar Torsion Box of Composite Material" for aircraft, comprising a lower skin, an upper skin, several spars, each of which comprises in turn a chord and a web, several stringers in the lower skin and several stringers in the upper skin, wherein the mentioned integrated torsion box structure is achieved by means of joining unitary U-shaped structural elements, unitary U-shaped structural elements with a flap and unitary C-shaped structural elements with a flap.

As for the leading edges of aircraft lifting surfaces (such as an HTP), there have been designs based on metallic parts that were soon replaced by Composite Fiber Reinforced Plastic (CFRP) designs, Glass Fiber Reinforced Plastic (GFRP) or other materials.

The standard design for leading edges comprises a nose or skin plate stiffened by leading edge ribs. In the case of large aircraft, two additional metallic spars, where one of them is vertical next to the foremost point and the other one is diagonal, have been used.

The skin panels can be thickened up by honeycomb cores and can be covered by a metallic protection cover which can be made of steel or aluminium alloys to protect the leading edge from erosion phenomena.

One example of an integrated leading edge is disclosed in EP 2687436 A1, referred to a "Highly integrated leading edge of an aircraft lifting surface". This document discloses an aircraft lifting surface comprising leading edges, torsion boxes and trailing edges; each leading edge comprising a plurality of leading edge ribs attached to the front spar of a torsion box and a leading edge profile formed by a plurality of sections attached to the leading edge ribs, and each leading edge profile section comprises a C-shaped skin and one or more auxiliary spars.

There are some prior art structural parts for aircraft in which the leading edges (or the leading edges and the trailing edges) are integrated with a multispar torsion box in a single structure (see e.g. document EP 3156323 A1).

US 2016/0031551 A1, referred to "Laminar flow winglet", discloses an aircraft wing tip device that may include a unitized, monolithic leading edge torque box that may be formed of polymer matrix fiber-reinforced material. The leading edge torque box may include a skin that may define a continuous, uninterrupted outer mold line surface extending aftwardly from a winglet leading edge by a distance of at least approximately 60 percent of a local chord length. The leading edge torque box may further include at least one internal component extending between opposing inner surfaces of the skin and being integrally formed therewith. It is also contemplated that the trailing edge section and the leading edge torque box may be integrally formed into a unitized, monolithic, composite structure, such that the winglet comprises a single, unitary, structure from the winglet leading edge to the winglet trailing edge.

On the other hand, near the aircraft skin, the flow is mostly turbulent, which increases friction drag, because:
a) laminar flow is unstable with respect to small perturbations and,
b) surface imperfections may cause early transition to turbulence.

Laminar Flow reduces friction drag and implementation on the VTP and the HTP would potentially lead to up to 2% aircraft drag reduction depending on the flight mission.

The current existing methods to reach it are Natural Laminar Flow and Laminar Flow Control. Natural Laminar Flow (NLF) is obtained by a profile that produces a progressive pressure drop (i. e. favourable gradient) resulting in flow acceleration and a delay in transition to approximately the point of minimum pressure.

For Aircraft Lifting Surfaces Leading Edges in a Natural Laminar Flow environment, five main topics take place:
a. Anti-erosion plate bonded on top of theoretical aerodynamic profile result in backward step (current requirement of Backward Step for Natural Laminar Flow is very critical).
b. Leading Edge/Torsion Box interface fasteners heads create both forward and backward steps that force transition to turbulent flow (current requirement of Forward Step for Natural Laminar Flow is not as critical as Backward Step but it is also very remarkable).
c. Leading Edge/Torsion Box interface gap is notorious, variable and difficult to seal within Natural Laminar Flow tolerances.
d. Leading Edge and Torsion Box waviness due to the manufacturing and assembly processes (e.g.: joint between leading Edge Nose and Leading Edge Ribs in a conventional design).
e. Torsion box fastener heads located at the box covers create both forward and backward steps that force transition to turbulent flow.

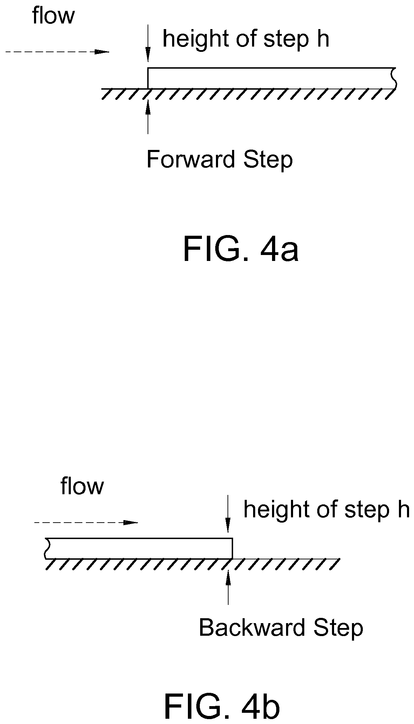

The concepts of Forward Step and Backward Step are illustrated in figures 4a and 4b.

Due to the complex geometry of the aircraft lifting surfaces by the combination of various design requirements (taper, dihedral, double curvature, asymmetry of aerodynamic profile, etc.) it is not feasible in an industrial way to define a single skin for high production rates. In effect, the aircraft lifting surfaces (horizontal tail planes, vertical tail planes and wings) share a number of specific features:
- Existence of double curved surfaces (especially in HTPs and wings) that do not make it possible to conform the CFRP laminate for both surfaces of the skins at the same time.
- Aggressive torsion and conicity with great difference in size and orientation between the root section and the tip section, causing the orientations of the laminates to deviate from the ideal theoretical values.
- Large size of said lifting surfaces (HTPs, VTPs and wings) compared to the size of a winglet.
- Laminate thicknesses much higher than those of a winglet due to the greater magnitude of loads that must be supported by the liftting surfaces and their greater structural responsibility (e.g. reinforcement for bird impact), making the forming of exterior laminates more complicated.

This makes it necessary to find new ways of integrating the leading edge.

### Summary of the invention

The object of the present invention is to provide an aircraft laminar multispar lifting surface in which the leading edge is integrated with a multispar torsion box in a single structure such that the specific features of the lifting surface are taken into account.

The invention provides an aircraft laminar multispar lifting surface, made of Composite Fibre Reinforced Plastic and comprising a multispar torsion box and a leading edge,
the multispar torsion box comprising a forward spar, a rear spar and intermediate spars,
the leading edge comprising at least one spar,
the outer skin of the aircraft laminar multispar lifting surface comprising an upper cover, a lower cover and a nose cup covering the nose tip of the leading edge,
the leading edge being integrated with the multispar torsion box in a single structure,
wherein the upper cover and the lower cover of the outer skin of the aircraft laminar multispar lifting surface extend over the torsion box and partially over the leading edge, with an overlapping area between each of the upper and lower covers and the nose cup.

In this way it is possible to obtain an optimal solution in terms of aerodynamic performance as:
a. Leading Edge/Torsion Box interface fasteners heads are not required. Thus there are no forward and backward steps that force transition to turbulent flow increasing drag.
b. Leading Edge/Torsion Box interface gap does not exist.
c. Leading Edge waviness is negligible due to the absence of ribs inside the Leading Edge structure.
d. Torsion box fastener heads are not required as the box structure is an integrated multispar structure.
e. Leading Edge anti-erosion plate integrated into the laminate of the nose providing a flush continuous surface to the flow of air

Additionally, the integration of the Leading Edge to the Torsion Box provides the following advantages:
a. Leading Edge/Torsion Box assembly phase is not required as both components are integrated during the manufacturing phase resulting in Cost savings.

Leading Edge/Torsion Box interface fasteners are not required resulting in weight reduction.

The invention offers the following advantages with respect to some of the solutions known from the prior art:
- Fuel consumption reduction as consequence of Aircraft drag reduction by means of achieving natural laminar flow up to at least 50% of chord at upper and lower parts of the aero profile.
- Weight reduction due to integration and due to improved ways of certification of the structure, by means of assuming new residual strength capabilities.
- Recurring cost saving due to the integration of the torsion box and the leading edge in a one-shot CFRP structure.

There is a reduction in costs, both by the reduction of the hours needed for making the necessary parts and by the lesser number of parts to be manufactured.

Other characteristics and advantages of the present invention will be clear from the following detailed description of several embodiments illustrative of its object in relation to the attached figures.

### Brief description of the drawings

Figure 1 is a perspective view of a prior art horizontal tail plane of an aircraft showing the torsion boxes, the leading edges and the trailing edges with control surfaces.
Figure 2 is a cross-section of a prior art multispar box.
Figure 3 is a perspective view of a prior art leading edge profile.
Figure 4a is a typical illustration of the Forward Step.
Figure 4b is a typical illustration of the Backward Step.
Figure 5 is a perspective view of an aircraft laminar multispar lifting surface of the invention.
Figure 6 is a cross-section view of the aircraft laminar multispar lifting surface of the invention, showing the leading edge and one end of the multispar box and the internal elements.
Figure 7 is a cross-section view of the aircraft laminar multispar lifting surface of the invention, showing the multispar box and the leading edge.
Figure 8 is a cross-section view of another embodiment of the aircraft laminar multispar lifting surface of the invention, showing the multispar box and the leading edge.
Figure 9 is a detailed view of figure 8 showing the leading edge and one end of the multispar box and the internal elements.
Figure 10 is a cross-section view of another embodiment of the aircraft laminar multispar lifting surface of the invention, showing the multispar box and the leading edge.
Figure 11 is an enlarged detail of figure 10.
Figure 12 is a cross-section view of another embodiment of the aircraft laminar multispar lifting surface of the invention, showing the multispar box and the leading edge.
Figure 13 is an enlarged detail of figure 12.
Figure 14 shows several views of another embodiment of the aircraft laminar multispar lifting surface of the invention, showing the multispar box and the leading edge and enlarged details.

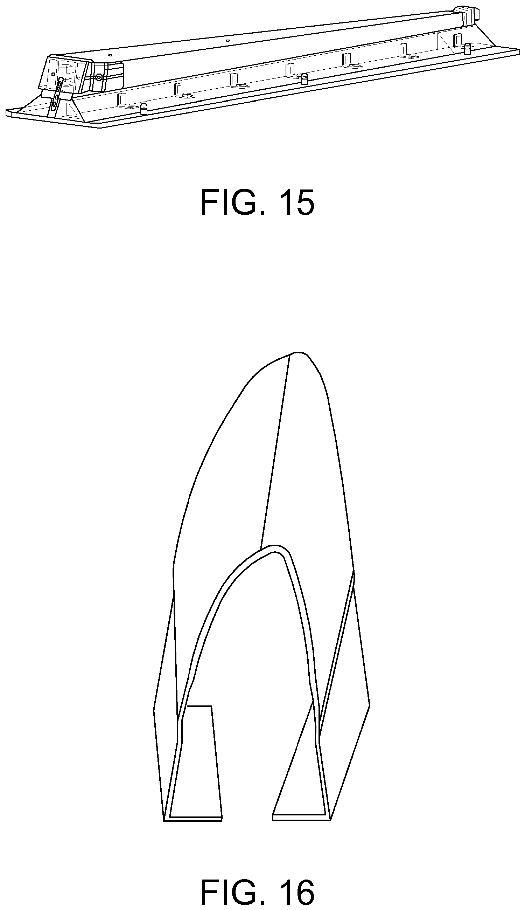

Figure 15 is a perspective view of a mandrel, a stand a caul-plate and auxiliary modules used in spar hot-forming.
Figure 16 is a view of a mandrel for a nose tip.

### Detailed description of the invention

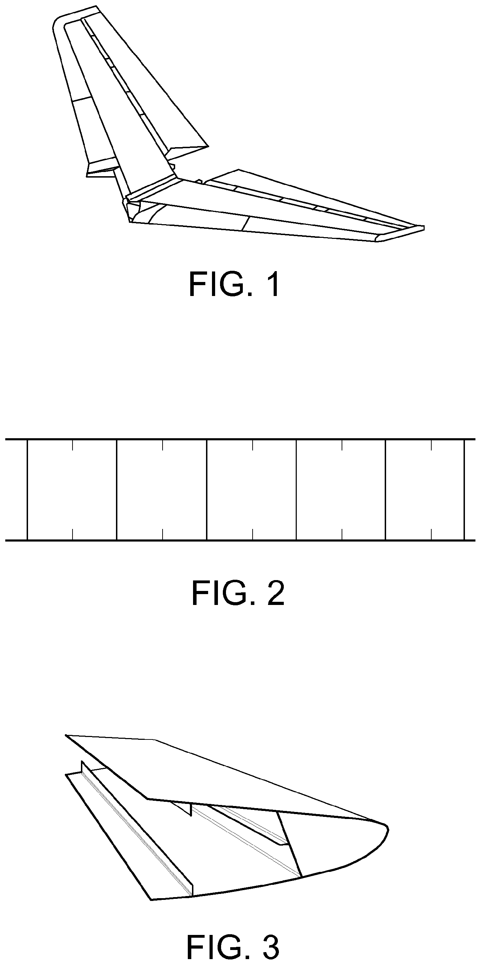

Figure 1 shows a prior art horizontal tail plane of an aircraft showing the torsion boxes, the leading edges and the trailing edges with control surfaces.

Figure 2 shows a cross-section of a multispar box of the prior art, in which several spars can be seen from left to right, between the upper and lower covers.

Figure 3 is a view of a specific leading edge profile of the prior art, which has to be joined to a torsion box to form an aircraft lifting surface such a horizontal tail plane.

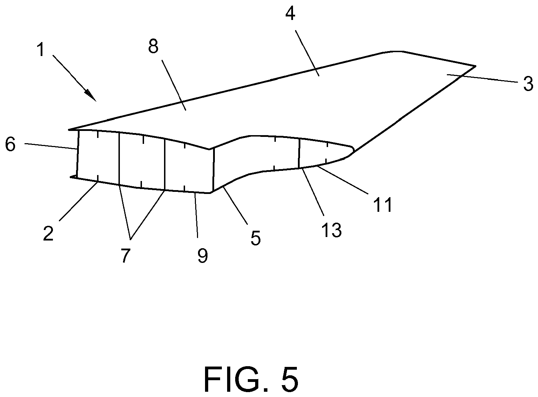

Figure 5 shows an aircraft laminar multispar lifting surface 1 of the invention. This structural part comprises a multispar torsion box 2 and a leading edge 3 The multispar torsion box 2 comprises a forward spar 5, a rear spar 6 and intermediate spars 7. As it can be seen in Fig. 4, the leading edge 3 is integrated with the multispar torsion box 2 in a single structure. The outer skin 4 of the aircraft laminar multispar lifting surface 1 comprises an upper cover 8, a lower cover 9 and a nose cup 11 covering the nose tip of the leading edge 3.

As for the multispar torsion box 2, it can additionally comprise several transverse ribs (not shown) between the forward spar 5 and the rear spar 6. These ribs can be located next to the load introduction areas.

The multispar torsion box 2 can additionally comprise several stringers.

The object of Fig. 5 is a horizontal tail plane (HTP) according to the invention. However, the invention can be applied to other aircraft lifting surfaces, such as a vertical tail plane (VTP) or a wing of an aircraft.

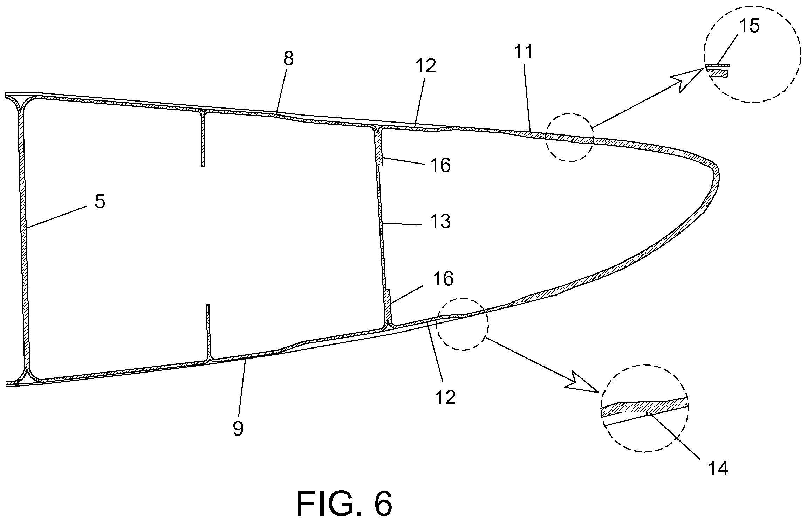

In Fig. 6 it can be seen that there is an overlapping area 12 between the upper cover 8 and the nose cup 11, and between the lower cover 9 and the nose cup 11. This configuration allows a longer and continuous interface between the leading edge 3 and the multispar box 2 providing a better load transfer and therefore a better structural behaviour.

Fig. 6 shows the leading edge 3 and one end of the multispar box 2, and the corresponding internal elements. It can be seen that the ends of the nose cup 11 can be bended to form inner auxiliary stiffeners 16 adjacent to the spar 13 of the leading edge 3.

It can that additionally comprise rowings 14 after the ends of the upper cover 8 and the lower cover 9 to avoid gaps or holes in the OML (Outer Mold Line) surface or outer surface of the aircraft. The rowings 14 can be straps of unidirectional fibres

It can also comprise an integrated flush antierosion plate 15 at the end of the nose tip (for example, 0,4 mm thick), to protect the leading edge end from erosion.

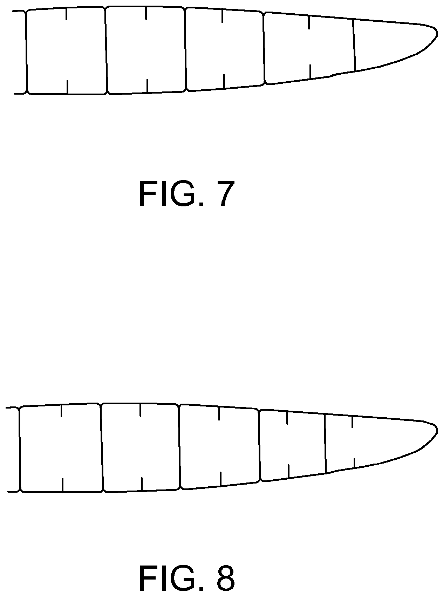

Fig. 7 is a cross-section view of the aircraft laminar multispar lifting surface of the invention, and shows the multispar box and the leading edge. The right end of Fig. 7 corresponds to Fig. 6.

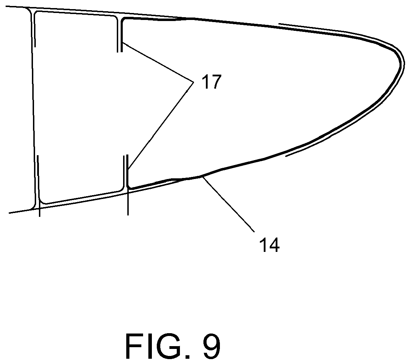

Figures 8 and 9 show another embodiment of the aircraft laminar multispar lifting surface of the invention. Figure 8 is a cross-section view that shows the multispar box and the leading edge, and figure 9 is an enlarged detail of the right end of figure 8. In figure 9 it can be seen that the leading edge 3 comprises at least one auxiliary stiffener 17 on each overlapping area 12 between the upper and lower covers 8, 9 and the nose cup 11.

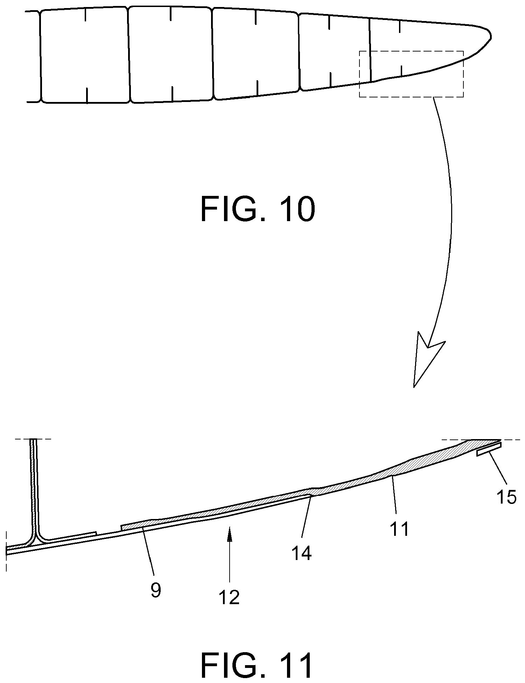

Figures 10 and 11 show another embodiment of the aircraft laminar multispar lifting surface of the invention. Figure 10 is a cross-section view that shows the multispar box and the leading edge, and figure 11 is an enlarged detail of one of the overlapping areas 12 of figure 10. In figure 11 it can be seen that there is a simple overlap in the overlapping area 12 between the corresponding cover 9 and the nose cup 11. Rowings 14 can be placed after the end of the covers 8, 9 following the overlapping area 12 to avoid gaps in the outer surface of the aircraft.

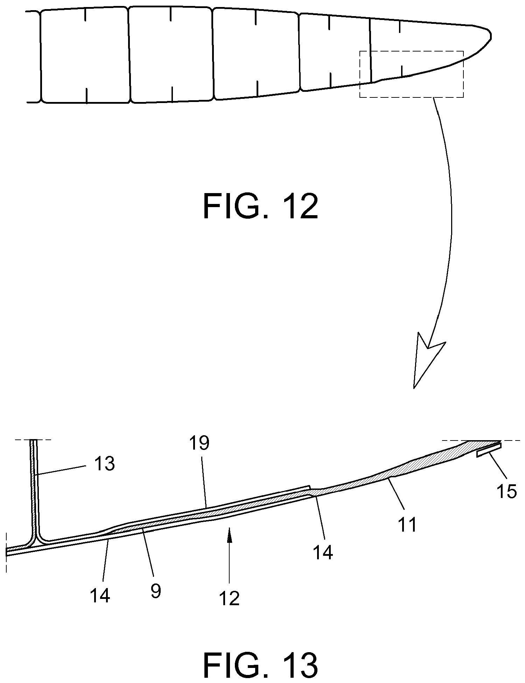

Figures 12 and 13 show another embodiment of the aircraft laminar multispar lifting surface of the invention. Figure 12 is a cross-section view that shows the multispar box and the leading edge, and figure 13 is an enlarged detail of one of the overlapping areas 12 of figure 12. In figure 13 it can be seen that there is a double overlap in the overlapping area 12. In effect, the section of the nose cup 11 in the overlapping area 12 is placed between the cover 9 and an extension 19 of the spar 13 of the leading edge. Rowings 14 can be placed after the end of the covers 8, 9 following the overlapping area 12 to avoid gaps in the outer surface of the aircraft.

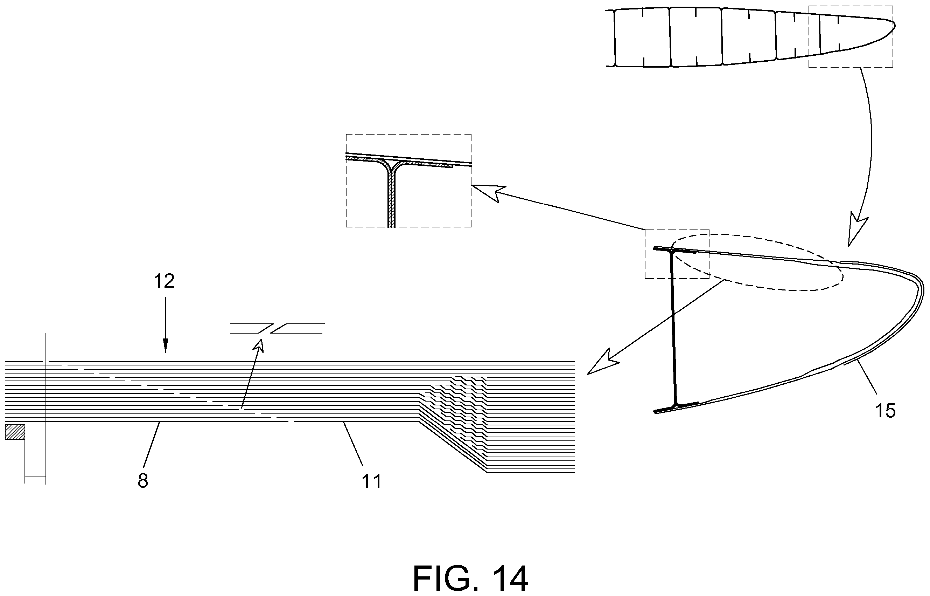

Figure 14 shows another embodiment of the aircraft laminar multispar lifting surface of the invention. A cross-section view that shows the multispar box and the leading edge is shown, and an enlarged detail of the end of the lifting surface. An enlarged detail shows the overlapping area 12, where the end of each laminate of the upper and lower covers 8, 9 overlaps with the beginning of the corresponding laminate of the nose cup 11; an enlarged detail of the transition between the laminates is shown above the overlapping area 12.

The aircraft laminar multispar lifting surface 1 of the invention can additionally comprise a trailing edge.

Concerning the structural way of working, the integration of the leading edge 3 with the torsion box 2 eliminates the existing joint (by means of screws), showing a continuous cell as prolongation of what it would be a front spar cap. Nevertheless, bird impact requirement (no damage or get home load -if pilot is conscious about impact- at the Torsion Box Front Spar) can be maintained. This Torsion Box Front Spar is defined as the first spar that is continuous from the tip to the root of the structure where it is attached to the rest of the aircraft.

The structural concept of the invention can also challenge the current certification requirements: for example, as the concept proposed here offers a solution with multiple spars, if one bird impact has to be considered in flight direction and the structure that it is being proposed shows multiple "walls" (spars), mitigating the bird advance, more residual strength capability can be reached. Consequently, the requirement of no damage at front spar could be mitigated.

Concerning operability aspects, the proposal changes the current philosophy followed in the known aircraft lifting surfaces where the leadings edges are interchangeable. Due to this fact, specific inspection and repair procedures have to be implemented to be compatible with whe solution of the invention.

Concerning the manufacturing of the component, nor the techniques for the box or the ones for the leading edge can be aplicable. One continuous skin formed around the nose tip would not be formed correctlly nor eficiently. However, a continuity between the two covers must be assured. Also the integration of the anti-erosion protection must be included.

The laminate of the nose tip can be either monolithic in composite or it can incorporate a hybrid laminate of carbon fiber and glass fiber to improve the resistance against impacts of high energy (bird). It can also be made entirely of materials with high strength against impact (such as Kevlar®).

The box can have an integrated metalic (or any other material) plate, an anti-erosion poliurethane tape or any other concept without anti-erosion protection. This anti-erosion protection is preferably directly cocured during the one-shot manufacturing process to obtain a full one-shot structure. Alternatively it can be bonded over the Leading Edge surface in a second step using known composite-metal bonding techniques.

Lateral caul plates must be extended over the covers and a nose tip caul plate may also be needed to assure the compaction of the laminates (plus anti-erosion material) against it. It is also possible the use of a female tooling concept with inner mandrels instead of external caul-plates.

The use of inflatable mandrels is also possible to assure good compactation of every preform in an industrial enviroment without the potential problems that a hard tooling may offer.

The method for manufacturing an aircraft laminar multispar lifting surface 1 of the invention comprises the following steps:
a) Cleaning of tooling.
b) Lay-up and cutting.
   b1) Covers: direct lay-up over caul plates using a 3D ATL machine, and cutting the contour over the caul plate and the laying frame
   b2) Spars: flat lay-up using a 2D ATL machine, and subsequent cutting in the same flat table; flat tops of the spars are laid-up in flat.
   b3) Rowings: laid-up and cutting using the 2D ATL machine.
c) Hot-forming.
   c1) Spars:
      hot-forming performed in a hot-forming machine; a mandrel is placed over a stand to ensure correct positioning; a caul plate is placed over the laminate for each preform for forming; a silicon membrane is used for forming, heating up the laminate up to its forming temperature and applying vacuum slowly in order to bend the laminate avoiding wrinkles appearance; two auxiliary members are placed on the ends to avoid membrane from breaking.
   c2) Nose tip: formed in the same way as spars.
   c3) Rowings: formed from rectangular strips into triangular shapes using a forming tool.
d) Preforms assembly.
   The mandrels with the preforms are taken to the preforms assembly area, the rowings are placed and the covers and the caul plates are also placed; the anti-erosion plate is also positioned to be co-cured with the rest of the parts.
e) Bagging.
   A bag is sealed against the tool on sealing zones on each extreme of the modules to allow hot air and pressure to circulate inside the mandrel.
f) Curing.
   Once the preforms and mandrels are set and bagged, the assembly is placed in the autoclave and the curing cycle starts; flat tops for spars are also cured in the same curing cycle.
g) Demoulding.
   The cured part and the tooling are taken out of the autoclave and brought to the demoulding station; the debagging step is performed, and then the composite part is released, demoulding one by one all the caul plates and the inner modules; the tooling is taken to the cleaning area, and the composite part is taken to the trimming station
h) Trimming.
   First trimming is performed by a trimming machine; last trimming and finishing is performed manually.
i) Non destructive Testing (NDT): covers, spars and radii are inspected by ultrasonic pulse-echo; multispar box is inspected by an automated NDT system
j) Edge sealing.
k) Painting.

The mandrels used in the manufacturing method are preferable made of aluminium.

An adhesive can be applied in the co-cured overlapping areas 12 to improve adherence.

The invention proposes a new structural concept for enabling a significant aircraft drag reduction via natural laminar flow technology by the extension of the multispar box architecture to the leading edge in a one-shot manufacturing process (with a new development for the nose area) together with a modified aero profile. Additionally, the concept also offers potential for a new residual strength capability philosophy.

Although the present invention has been fully described in connection with preferred embodiments, it is evident that modifications may be introduced within the scope thereof, not considering this as limited by these embodiments, but by the contents of the following claims.

## Claims

1. Aircraft laminar multispar lifting surface (1), made of Composite Fibre Reinforced Plastic and comprising a multispar torsion box (2) and a leading edge (3),
the multispar torsion box (2) comprising a forward spar (5), a rear spar (6) and intermediate spars (7),
the outer skin (4) of the aircraft laminar multispar lifting surface (1) comprising an upper cover (8), a lower cover (9) and a nose cup (11) covering the nose tip of the leading edge (3), the leading edge (3) being integrated with the multispar torsion box (2) in a single structure, **characterized in that**
the leading edge (3) comprising at least one spar (13), the upper cover (8) and the lower cover (9) of the outer skin (4) of the aircraft laminar multispar lifting surface (1) extend over the torsion box (2) and partially over the leading edge (3), with an overlapping area (12) between each of the upper and lower covers (8, 9) and the nose cup (11).

2. Aircraft laminar multispar lifting surface (1), according to claim 1, wherein the ends of the nose cup (11) are bended to form inner auxiliary stiffeners (16) adjacent to the spar (13) of the leading edge (3).

3. Aircraft laminar multispar lifting surface (1), according to any of the previous claims, that additionally comprises rowings (14) after the ends of the upper and lower covers (8, 9) following the overlapping area (12) to avoid gaps in the outer surface of the aircraft.

4. Aircraft laminar multispar lifting surface (1), according to any of the previous claims, that additionally comprises an integrated flush antierosion plate (15) at the foremost side of the nose tip.

5. Aircraft laminar multispar lifting surface (1), according to any of the previous claims, the aircraft box structural part (1) being a horizontal tail plane.

6. Aircraft laminar multispar lifting surface (1), according to any of the previous claims, the aircraft box structural part (1) being a vertical tail plane.

7. Aircraft laminar multispar lifting surface (1), according to any of the previous claims, the aircraft box structural part (1) being a wing.

8. Aircraft laminar multispar lifting surface (1), according to any of the previous claims, additionally comprising a trailing edge.

9. Aircraft laminar multispar lifting surface (1), according to any of the previous claims, wherein the multispar torsion box (2) additionally comprises several transverse ribs between the forward spar (5) and the rear spar (6).

10. Aircraft laminar multispar lifting surface (1), according to claim 9, wherein the ribs are located next to the load introduction areas.

11. Aircraft laminar multispar lifting surface (1), according to any of the previous claims, wherein the multispar torsion box (2) additionally comprises several stringers.

12. Aircraft laminar multispar lifting surface (1), according to any of the previous claims, wherein the leading edge (3) comprises at least one auxiliary stiffener on each overlapping area (12) between the upper and lower covers (8, 9) and the nose cup (11).

13. Aircraft laminar multispar lifting surface (1), according to any of the previous claims, wherein the overlap between the upper and lower covers (8, 9) and the nose cup (11) is a simple overlap.

14. Aircraft laminar multispar lifting surface (1), according to any of claims 1 to 12, wherein the section of the nose cup (11) in the overlapping area (12) is placed between the upper and lower covers (8, 9) and an extension (19) of the spar (13) of the leading edge (3).

15. Aircraft laminar multispar lifting surface (1), according to any of claims 1 to 12, wherein in the overlapping area (12) the end of each laminate of the upper and lower covers (8, 9) overlaps with the beginning of the corresponding laminate of the nose cup (11).

16. Method for manufacturing an aircraft laminar multispar lifting surface (1) of claims 1 to 14, **characterised in that** it comprises the following steps:
a) Cleaning of tooling.
b) Lay-up and cutting.
b1) Covers: direct lay-up over caul plates using a 3D ATL machine, and cutting the contour over the caul plate and the laying frame
b2) Spars: flat lay-up using a 2D ATL machine, and subsequent cutting in the same flat table; flat tops of the spars are laid-up in flat.
b3) Rowings: laid-up and cutting using the 2D ATL machine.
c) Hot-forming.
c1) Spars:
hot-forming performed in a hot-forming machine; a mandrel is placed over a stand to ensure correct positioning; a caul plate is placed over the laminate for each preform for forming; a silicon membrane is used for forming, heating up the laminate up to its forming temperature and applying vacuum slowly in order to bend the laminate avoiding wrinkles appearance; two auxiliary members are placed on the ends to avoid membrane from breaking.
c2) Nose tip: formed in the same way as spars.
c3) Rowings: formed from rectangular strips into triangular shapes using a forming tool.
d) Preforms assembly.
The mandrels with the preforms are taken to the preforms assembly area, the rowings are placed and the covers and the caul plates are also placed; the anti-erosion plate is also positioned to be co-cured with the rest of the parts.
e) Bagging.
A bag is sealed against the tool on sealing zones on each extreme of the modules to allow hot air and pressure to circulate inside the mandrel.
f) Curing.
Once the preforms and mandrels are set and bagged, the assembly is placed in the autoclave and the curing cycle starts; flat tops for spars are also cured in the same curing cycle.
g) Demoulding.
The cured part and the tooling are taken out of the autoclave and brought to the demoulding station; the debagging step is performed, and then the composite part is released, demoulding one by one all the caul plates and the inner modules; the tooling is taken to the cleaning area, and the composite part is taken to the trimming station
h) Trimming.
First trimming is performed by a trimming machine; last trimming and finishing is performed manually.
i) Non destructive Testing (NDT): covers, spars and radii are inspected by ultrasonic pulse-echo; multispar box is inspected by an automated NDT system
j) Edge sealing.
k) Painting.

17. Method for manufacturing an aircraft laminar multispar lifting surface (1) according to claim 16, wherein the mandrels are made of aluminium.

18. Method for manufacturing an aircraft laminar multispar lifting surface (1) according to claims 16 or 17, wherein an adhesive is applied in the co-cured overlapping areas to improve adherence.

## Patentansprüche

1. Laminare Auftriebsfläche (1) mit mehreren Holmen für ein Flugzeug, die aus faserverstärktem Verbundkunststoff hergestellt ist und einen Torsionskasten (2) mit mehreren Holmen und eine Anströmkante (3) umfasst,
wobei der Torsionskasten (2) mit mehreren Holmen einen vorderen Holm (5), einen hinteren Holm (6) und Zwischenholme (7) umfasst,
wobei die Außenhaut (4) der laminaren Auftriebsfläche (1) mit mehreren Holmen für ein Flugzeug eine obere Abdeckung (8), eine untere Abdeckung (9) und eine Nasenschale (11) umfasst, die die Nasenspitze der Anströmkante (3) abdeckt, wobei die Anströmkante (3) mit dem Torsionskasten (2) mit mehreren Holmen in einer einzigen Struktur integriert ist, **dadurch gekennzeichnet, dass**
die Anströmkante (3) mindestens einen Holm (13) umfasst, die obere Abdeckung (8) und die untere Abdeckung (9) der Außenhaut (4) der laminaren Auftriebsfläche (1) mit mehreren Holmen für ein Flugzeug sich über den Torsionskasten (2) und teilweise über die Anströmkante (3) erstrecken, mit einem Überlappungsbereich (12) zwischen jeweils der oberen und der unteren Abdeckung (8, 9) und der Nasenschale (11).

2. Laminare Auftriebsfläche (1) mit mehreren Holmen für ein Flugzeug nach Anspruch 1, wobei die Enden der
Nasenschale (11) gebogen sind, um innere Hilfsversteifungen (16) benachbart zum Holm (13) der Anströmkante (3) zu bilden.

3. Laminare Auftriebsfläche (1) mit mehreren Holmen für ein Flugzeug nach einem der vorhergehenden Ansprüche, die zusätzlich Rovings (14) nach den Enden der oberen und unteren Abdeckung (8, 9) umfasst, die sich an den Überlappungsbereich (12) anschließen, um Lücken in der Außenfläche des Flugzeugs zu vermeiden.

4. Laminare Auftriebsfläche (1) mit mehreren Holmen für ein Flugzeug nach einem der vorhergehenden Ansprüche, die zusätzlich eine integrierte bündige Erosionsschutzplatte (15) an der vordersten Seite der Nasenspitze umfasst.

5. Laminare Auftriebsfläche (1) mit mehreren Holmen für ein Flugzeug nach einem der vorhergehenden Ansprüche, wobei das Flugzeug-Kastenstrukturteil (1) ein horizontales Leitwerk ist.

6. Laminare Auftriebsfläche (1) mit mehreren Holmen für ein Flugzeug nach einem der vorhergehenden Ansprüche, wobei das Flugzeug-Kastenstrukturteil (1) ein vertikales Leitwerk ist.

7. Laminare Auftriebsfläche (1) mit mehreren Holmen für ein Flugzeug nach einem der vorhergehenden Ansprüche, wobei das Flugzeug-Kastenstrukturteil (1) ein Flügel ist.

8. Laminare Auftriebsfläche (1) mit mehreren Holmen für ein Flugzeug nach einem der vorhergehenden Ansprüche, die zusätzlich eine Hinterkante umfasst.

9. Laminare Auftriebsfläche (1) mit mehreren Holmen für ein Flugzeug nach einem der vorhergehenden Ansprüche, wobei der Torsionskasten (2) mit mehreren Holmen zusätzlich mehrere Querrippen zwischen dem vorderen Holm (5) und dem hinteren Holm (6) umfasst.

10. Laminare Auftriebsfläche (1) mit mehreren Holmen für ein Flugzeug nach Anspruch 9, wobei die Rippen neben den Lasteinleitungsbereichen angeordnet sind.

11. Laminare Auftriebsfläche (1) mit mehreren Holmen für ein Flugzeug nach einem der vorhergehenden Ansprüche, wobei der Torsionskasten (2) mit mehreren Holmen zusätzlich mehrere Stringer umfasst.

12. Laminare Auftriebsfläche (1) mit mehreren Holmen für ein Flugzeug nach einem der vorhergehenden Ansprüche, wobei die Anströmkante (3) mindestens eine Hilfsversteifung auf jedem Überlappungsbereich (12) zwischen der oberen und unteren Abdeckung (8, 9) und der Nasenschale (11) umfasst.

13. Laminare Auftriebsfläche (1) mit mehreren Holmen für ein Flugzeug nach einem der vorhergehenden Ansprüche, wobei die Überlappung zwischen der oberen und unteren Abdeckung (8, 9) und der Nasenschale (11) eine einfache Überlappung ist.

14. Laminare Auftriebsfläche (1) mit mehreren Holmen für ein Flugzeug nach einem der Ansprüche 1 bis 12, wobei der Abschnitt der Nasenschale (11) im Überlappungsbereich (12) zwischen der oberen und unteren Abdeckung (8, 9) und einer Verlängerung (19) des Holms (13) der Anströmkante (3) angeordnet ist.

15. Laminare Auftriebsfläche (1) mit mehreren Holmen für ein Flugzeug nach einem der Ansprüche 1 bis 12, wobei im Überlappungsbereich (12) das Ende jedes Laminats der oberen und unteren Abdeckung (8, 9) mit dem Anfang des entsprechenden Laminats der Nasenschale (11) überlappt.

16. Methode zur Herstellung einer laminaren Auftriebsfläche (1) mit mehreren Holmen für ein Flugzeug nach den Ansprüchen 1 bis 14, **dadurch gekennzeichnet, dass** sie die folgenden Schritte umfasst:
a) Reinigen von Werkzeugen.
b) Auflegen und Schneiden.
b1) Abdeckungen: direktes Auflegen über Pressbleche unter Verwendung einer 3D-ATL-Maschine und Schneiden der Kontur über dem Pressblech und dem Verlegerahmen
b2) Holme: flaches Auflegen unter Verwendung einer 2D-ATL-Maschine und anschließendes Schneiden im gleichen
flachen Tisch; flache Oberseiten der Holme werden flach aufgelegt.
b3) Rovings: Auflegen und Schneiden unter Verwendung der 2D-ATL-Maschine.
c) Warmformen.
c1) Holme:
Warmformen, durchgeführt in einer Warmformmaschine; ein Dorn wird über einem Ständer platziert, um eine korrekte Positionierung zu gewährleisten; für jede Vorform wird über dem Laminat ein Pressblech zum Formen platziert; eine Silikonmembran wird zum Formen verwendet, wobei das Laminat bis zu seiner Formtemperatur aufgeheizt und langsam ein Vakuum angelegt wird, um das Laminat zu biegen und das Auftreten von Falten zu vermeiden; zwei Hilfselemente werden an den Enden angeordnet, um ein Brechen der Membran zu verhindern.
c2) Nasenspitze: wird auf die gleiche Art geformt wie die Holme.
c3) Rovings: werden aus rechteckigen Streifen unter Verwendung eines Formwerkzeugs in dreieckige Formen geformt.
d) Zusammenbauen der Vorformen.
Die Dorne mit den Vorformen werden zum Montagebereich für die Vorformen gebracht, die Rovings werden angeordnet und die Abdeckungen und die Pressbleche werden ebenfalls angeordnet; die Erosionsschutzplatte wird ebenfalls positioniert, um mit dem Rest der Teile mit auszuhärten.
e) In Beutel packen.
Ein Beutel wird an den Dichtungszonen an jedem Ende der Module gegen das Werkzeug abgedichtet, damit Heißluft und Druck im Inneren des Dorns zirkulieren können.
f) Aushärten.
Sobald die Vorformen und Dorne eingestellt und in Beutel verpackt sind, wird die Baugruppe in den Autoklaven gestellt und der Aushärtungszyklus beginnt; im gleichen Aushärtungszyklus werden auch flache Oberteile für Holme ausgehärtet.
g) Entformen.
Das ausgehärtete Teil und die Werkzeuge werden aus dem Autoklaven entnommen und zur Entformungsstation gebracht; der Schritt des Auspackens aus dem Beutel wird durchgeführt, und dann wird das Verbundteil entformt, wobei nacheinander alle Pressbleche und die inneren Module entformt werden; die Werkzeuge werden zum Reinigungsbereich gebracht, und das Verbundteil wird zur Schneidestation gebracht
h) Schneiden.
Das erste Schneiden erfolgt mit einer Schneidemaschine; das letzte Schneiden und die Endbearbeitung werden manuell durchgeführt.
i) Zerstörungsfreie Prüfung (NDT): Abdeckungen, Holme und Radien werden mit Ultraschall-Impulsecho geprüft; der Kasten mit mehreren Holmen wird mit einem automatischen NDT-System geprüft
j) Versiegeln der Kanten.
k) Lackieren.

17. Methode zur Herstellung einer laminaren Auftriebsfläche (1) mit mehreren Holmen für ein Flugzeug nach Anspruch 16, wobei die Dorne aus Aluminium hergestellt sind.

18. Methode zur Herstellung einer laminaren Auftriebsfläche (1) mit mehreren Holmen für ein Flugzeug nach den Ansprüchen 16 oder 17, wobei in den mitgehärteten Überlappungsbereichen ein Klebstoff aufgetragen wird, um die Haftung zu verbessern.

## Revendications

1. Surface de sustentation multilongeron laminaire d'aéronef (1), en matière plastique renforcée de fibres composites et comprenant un caisson de torsion multilongeron (2) et un bord d'attaque (3), le caisson de torsion multilongeron (2) comprenant un longeron avant (5), un longeron arrière (6) et des longerons intermédiaires (7),
le revêtement extérieur (4) de la surface de sustentation multilongeorn laminaire de l'aéronef (1) comprenant un couvercle supérieur (8), un couvercle inférieur (9) et un couvre-nez (11) recouvrant la pointe avant du bord d'attaque (3), le bord d'attaque (3) étant intégré avec le caisson de torsion multilongeorn (2) dans une structure unique, **caractérisé en ce que**
le bord d'attaque (3) comprend au moins un longeron (13), la couverture supérieure (8) et la couverture inférieure (9) du revêtement extérieur (4) de la surface de sustentation multilongeorn laminaire de l'aéronef (1) s'étendent sur le caisson de torsion (2) et partiellement sur le bord d'attaque (3), avec une zone de chevauchement (12) entre chacune des couvertures supérieure et inférieure (8, 9) et le couvre-nez (11).

2. Surface de sustentation multilongeron laminaire d'aéronef (1), selon la revendication 1, dans laquelle les extrémités
du couvre-nez (11) sont pliées pour former des raidisseurs auxiliaires intérieurs (16) adjacents au longeron (13) du bord d'attaque (3).

3. Surface de sustentation multilongeron laminaire d'aéronef (1), selon l'une des revendications précédentes, qui comprend en outre des avirons (14) après les extrémités des couvercles supérieur et inférieur (8, 9) suivant la zone de chevauchement (12) pour éviter les vides sur la surface extérieure de l'aéronef.

4. Surface de sustentation multilongeron laminaire d'aéronef (1), selon l'une des revendications précédentes, qui comprend en outre une plaque d'actionnement anti-érosion intégrée (15) sur le côté le plus avancé de la pointe du nez.

5. Surface de sustentation multilongeron laminaire d'aéronef (1), selon l'une des revendications précédentes, la partie structurelle du caisson de l'aéronef (1) étant un empennage horizontal.

6. Surface de sustentation multilongeron laminaire d'aéronef (1), selon l'une des revendications précédentes, la partie structurelle du caisson de l'aéronef (1) étant un empennage vertical.

7. Surface de sustentation multilongeron laminaire d'aéronef (1), selon l'une des revendications précédentes, la partie structurelle du caisson de l'aéronef (1) étant une aile.

8. Surface de sustentation multilongeron laminaire d'aéronef (1), selon l'une des revendications précédentes, comprenant en outre un bord de fuite.

9. Surface de sustentation multilongeron laminaire d'aéronef (1), selon l'une des revendications précédentes, dans laquelle le caisson de torsion multilongeron (2) comprend en outre plusieurs nervures transversales entre le longeron avant (5) et le longeron arrière (6).

10. Surface de sustentation multilongeron laminaire d'aéronef (1), selon la revendication 9, dans laquelle les nervures sont situées à côté des zones d'introduction de la charge.

11. Surface de sustentation multilongeron laminaire d'aéronef (1), selon l'une des revendications précédentes, dans laquelle le caisson de torsion multilongeron (2) comprend en outre plusieurs longerons.

12. Surface de sustentation multilongeron laminaire d'aéronef (1), selon l'une des revendications précédentes, dans laquelle le bord d'attaque (3) comprend au moins un raidisseur auxiliaire sur chaque zone de chevauchement (12) entre les couvercles supérieur et inférieur (8, 9) et le couvre-nez (11).

13. Surface de sustentation multilongeron laminaire d'aéronef (1), selon l'une des revendications précédentes, dans laquelle le chevauchement entre les couvercles supérieur et inférieur (8, 9) et le couvre-nez (11) est un simple chevauchement.

14. Surface de sustentation multilongeron laminaire d'aéronef (1), selon l'une des revendications 1 à 12, dans laquelle la section du couvre-nez (11) dans la zone de chevauchement (12) est placée entre les couvercles supérieur et inférieur (8, 9) et un prolongement (19) du longeron (13) du bord d'attaque (3).

15. Surface de sustentation multilongeron laminaire d'aéronef (1), selon l'une des revendications 1 à 12, dans laquelle, dans la zone de chevauchement (12), l'extrémité de chaque stratifié des couvercles supérieur et inférieur (8, 9) chevauche le début du stratifié correspondant du couvre-nez (11).

16. Procédé de fabrication d'une surface de sustentation multilongeron laminaire d'aéronef (1) des revendications 1 à 14, **caractérisé en ce qu'**il comprend les étapes suivantes :
a) Nettoyage de l'outillage.
b) Mise en page et découpe.
b1) Couvertures : pose directe sur des plaques de conformation à l'aide d'une machine ATL 3D, et découpe du contour sur la plaque de conformation et le cadre de pose
b2) Longerons : mise à plat à l'aide d'une machine ATL 2D, puis découpe dans la même table plate ; les sommets des cales sont mis à plat.
b3) Avirons : mise en place et découpe à l'aide de la machine ATL 2D.
c) Formage à chaud.
c1) Longerons :
formage à chaud effectué dans une machine de formage à chaud ; un mandrin est placé sur un support pour assurer un positionnement correct ; une plaque de conformation est placée sur le stratifié pour chaque préforme à former ; une membrane en silicone est utilisée pour le formage, en chauffant le stratifié jusqu'à sa température de formage et en appliquant lentement le vide afin de courber le stratifié en évitant l'apparition de plis ; deux éléments auxiliaires sont placés sur les extrémités pour éviter que la membrane ne se casse.
c2) Pointe de nez : formée de la même manière que les longerons.
c3) Avirons : formés à partir de bandes rectangulaires en formes triangulaires à l'aide d'un outil de formage.
d) Assemblage des préformes.
Les mandrins avec les préformes sont amenés dans la zone d'assemblage des préformes, les avirons sont placés et les couvercles et les plaques de conformation sont également placés ; la plaque anti-érosion est également positionnée pour être durcie avec le reste des pièces.
e) Ensachage.
Un sac est scellé contre l'outil sur des zones de scellage à chaque extrémité des modules pour permettre à l'air chaud et à la pression de circuler à l'intérieur du mandrin.
f) Durcissement.
Une fois que les préformes et les mandrins sont ensachés, l'ensemble est placé dans l'autoclave et le cycle de durcissement commence ; les plateaux pour les barres sont également durcis au cours du même cycle de durcissement.
g) Démoulage.
La pièce durcie et l'outillage sont sortis de l'autoclave et amenés à la station de démoulage ; l'étape de désensachage est effectuée, puis la pièce composite est libérée, démoulant une à une toutes les plaques de conformation et les modules intérieurs ; l'outillage est amené dans la zone de nettoyage, et la pièce composite est amenée à la station d'ébarbage
h) Ébarbage.
Le premier ébarbage est effectué par une machine à ébarber ; le dernier ébarbage et la finition sont effectués manuellement.
i) Contrôle non destructif (CND) : les couvercles, les longerons et les rayons sont contrôlés par échographie à impulsions ultrasonores ; les caissons multilongerons sont contrôlés par un système CND automatisé
j) Scellage des bords.
k) Peinture.

17. Procédé de fabrication d'une surface de sustentation multilongeron laminaire d'aéronef (1) selon la revendication 16, dans lequel les mandrins sont en aluminium.

18. Procédé de fabrication d'une surface de sustentation multilongeron laminaire d'aéronef (1) selon revendications 16 ou 17, dans lequel un adhésif est appliqué dans les zones de chevauchement durcies pour améliorer l'adhérence.
